# EUROPEAN PATENT APPLICATION

(11) **EP 0 595 080 A1**
(43) Date of publication of application: **04.05.1994**
(21) Application number: 93116148.3
(22) Date of filing: 06.10.1993
(51) Int. Cl.: G02B 6/12

(54) **Low-loss strip-loaded optical waveguide**

(30) Priority: 28.10.1992 US 967590
(71) Applicant: International Business Machines Corporation, Armonk, N.Y. 10504 (US)
(72) Inventor: Halbout, Jean-Marc, Larchmont, New York 10538 (US); Iyer, Subramanian Srikanteswara, Yorktown Heights, New York 10598 (US); Kesan, Vijay Panchapa, Ridgefield, Connecticut 06877 (US); Treyz, George Victor, New York, New York 10016 (US)
(74) Representative: Schäfer, Wolfgang, Dipl.-Ing.

(57) **Abstract**

An optical waveguide is described incorporating a semiconductor substrate, a layer of silicon formed thereover, a layer of *Si*_{1-*x*} Ge_{*x*} or *Si*_{1-*x*-*y*} Ge_{*x*}*C*_{*y*} formed thereover for carrying optical radiation, and a layer of silicon or other material having a different index of refraction formed over the layer for carrying the radiation and is patterned to define the waveguide below thick areas and patterned to have thin areas elsewhere to provide a capping layer. The invention overcomes the problem of attenuation due to sidewall surfaces and interfaces normally used to define the lateral dimension of the waveguide.

## Description

This application is cross-referenced to EP application 92 107 337.5 (YO 991 061) filed April 29, 1992 entitled "LOW DEFECT DENSITY/ARBITRARY LATTICE CONSTANT HETEROEPITAXIAL LAYERS" which describes a semiconductor waveguide for passing predetermined wavelengths of radiant energy comprising a single crystal substrate having a first set of lattice parameters, a first epitaxial layer having a graded composition to provide a changing lattice parameter from one of the first set of lattice parameters to a second lattice parameter on the upper surface of the layer, the change in lattice parameter being in the range from 0.25 to 2 percent per 100 nm thickness, a second epitaxial layer formed over the first layer, and a third epitaxial layer formed over the second layer, the third layer including material selected to be transmissive to the predetermined wavelengths of radiant energy.

This invention relates to optical waveguides and, more particularly, to low loss semiconductor waveguides incorporating silicon-germanium alloys for transmission of radiant energy, for example, at 1.3µm.

Low-loss optical waveguides are a basic component of integrated optical systems. Waveguides on semiconductor substrates offer the attractive possibility of direct monolithic integration with active devices and even the attractive possibility of modulation of the light in amplitude or phase through the influence of a controlled carrier population on the optical refractive index in the material. Surfaces and interfaces between materials or a material and a gas such as air are a major source of losses in such devices. While epitaxial processes tend to give interfaces of excellent quality (even at the atomic level), subtractive processes such as reactive ion etching (RIE), wet etching, etc. usually yield surfaces which exhibit prohibitive scattering, particularly when integrated over long lengths or distances. These surfaces and interfaces are, however, necessary to define the waveguide, particularly in the lateral dimension of the waveguide. Therefore, the best waveguide structures would isolate radiant energy, optical light, radiation or optical mode from such surfaces and interfaces thereby minimizing the optical losses or attenuation and broadening the process tolerances in forming the waveguides. The scattering losses at a given interface are proportional to (Δ*n*)₂ where Δ*n* is the difference in the optical refractive indices of the materials forming the surface or interface. It is therefore desirable to limit the difference in the index of refraction at the surfaces or interfaces seen by the optical light or mode when carried by the waveguide.

One example of a multi-layer optical waveguide having differences in the index of refraction is described in U.S. Patent 4,606,602 which issued on August 19, 1986 to H.G. Unger et al. entitled "SELECTIVELY DISPERSIVE OPTICAL WAVEGUIDE FILMS". In the patent by Unger et al., a film having a predetermined width on a substrate and an optically effective coating which is relatively thin and placed over the film is provided for conducting lightwaves. The optical coating has a narrower width than the film and is placed over the center region of the film. The index of refraction increases from the substrate to the film and from the film to the coating. Materials such as glasses or transparent plastics may be used to form the substrate, film and coating.

U.S. Patent 4,929,302 which issued on May 29, 1990 to S. Valette describes a process for the production of light microguides using three layers of *SiO₂* dielectric layers each having a different index of refraction.

U.S. Patent 4,789,642 which issued on December 6, 1988 to J.P. Lorenzo et al. describes a low loss single mode channel waveguide for use in the 1.3 - 1.6 µm range, using a doped silicon substrate which is subjected to ion implantation to form a dielectric layer below the surface of the substrate. The substrate is then etched to provide exposed optical waveguide ribs of crystalline silicon on top of the previously formed dielectric layer. Epitaxial silicon can be added to enhance the thickness of the optical layer if needed for a particular design. A passivating layer can then be formed on top of the waveguide rib to complete the waveguide fabrication.

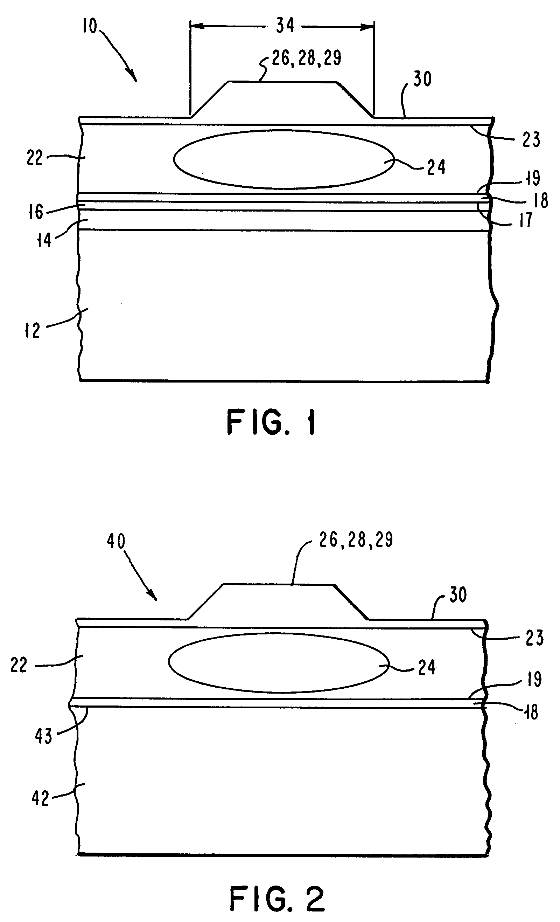

In a publication entitled "OPTICALWAVEGUIDING IN AN EPITAXIAL LAYER OF SILICON-GERMANIUM GROWN ON SILICON" by R.A. Soref, SPIE Proceedings, No. 1177, pp. 175-184, (1989), an optical waveguide was formed by epitaxially growing an alloy layer of Ge_{*x*}*Si*_{1-*x*} on an undoped (100) silicon wafer by chemical vapor deposition. The epitaxial layer had a thickness in the range from 1 - 10 µm. Strain in the GeSi layer was somewhat relieved away from the GeSi/Si interface due to the thickness of the GeSi layer. The epitaxial layer of GeSi was fashioned into an optical channel waveguide by photolithographic etching of the layer. Figure 1 of the publication shows that the channels were formed by etching about half of the layer of GeSi.

Thus, while the prior art shows numerous examples of waveguides formed of various materials, the materials are nevertheless shaped into channel waveguides by forming interfaces along the longitudinal sidewalls of the waveguide to contain the optical light or optical mode.

In accordance with the present invention, a waveguide and a method for making the waveguide is described for carrying optical radiation or light comprising a substrate, a first layer of silicon over the substrate, a second layer of material such as a binary alloy, for example, *Si*_{1-*x*} Ge_{*x*} or a ternary alloy, for example, *Si*_{1-*x*-*y*} Ge_{*x*}*C*_{*y*} over the first layer of silicon, and a third layer of material such as silicon over the second layer having a first thickness in first areas where the waveguide is desired and a second thickness in second areas where no waveguide is desired. The second layer may be a strained dislocation free layer having a thickness below the critical thickness of the layer and comprising an alloy of *Si*_{1-*x*} Ge_{*x*} where x is in the range from .01 to .03. In the ternary alloy selected, x or x and y may be chosen to provide an alloy having lattice matching to the first layer which may be silicon.

It is an object of the invention to define the location of the waveguide and particularly the lateral dimension of the waveguide by a patterned layer of silicon or of other material above the layer carrying the light beam.

It is a further object of the invention to remove surfaces and interfaces in the lateral dimension of the waveguide to minimize optical losses or attenuation of the light beam.

It is a further object of the invention to provide an optical waveguide without the requirement of utilizing sidewall surfaces or interfaces to define the lateral dimensions of the waveguide wherein the layer carrying the optical light or mode may have a width in the range from 5 - 200 µm.

It is a further object of the invention to isolate the optical mode in an optical waveguide from surfaces which exhibit prohibitive scattering.

It is a further object of the invention to provide a strip-loaded waveguide configuration where the loading strip is fabricated by means of a silicon cap layer having thick areas above the waveguide while the optical mode is confined in a layer of SiGe or SiGeC by the refractive index of the materials.

It is a further object of the invention to provide defect-free interfaces by epitaxial growth at interfaces between SiGe-Si and SiGeC-Si. Interfaces with defect-free or low defect density prevent substantial losses or attenuation to the optical light or optical mode.

It is a further object of the invention to reduce the defect density by providing stress-free SiGeC films which are lattice-matched to the supporting layer, for example, silicon or SiGe.

Ways of carrying out the invention are described in detail below with reference to drawings showing only specific embodiments, in which:
Fig. 1 is one embodiment of the invention;
Fig. 2 is an alternate embodiment of the invention.

Referring now to the drawing, Figure 1 shows a waveguide 10 for carrying optical radiation. A substrate 12 which may be single crystalline silicon has a layer 14 formed over substrate 12 which may be an insulator such as silicon dioxide. A layer 16 of single crystalline silicon is formed over layer 14. Layer 16 has an upper surface 17. Originally, layers 12, 14 and 16 may be a single crystal silicon substrate. Layer 14 may be formed by ion implantation of oxygen through upper surface 17 such as by way of separation by implantation of oxygen (SIMOX) process or by other silicon-on-insulator (SOI) process technology such as wafer bonding. Thus, layer 16 may have the same single crystal orientation as substrate 12. On upper surface 17 of layer 16 an epitaxial layer of silicon is formed which may have a thickness in the range from 10 nm to 5µm and typically may be 4µm thick. Layer 18 of silicon has an upper surface 19. On upper surface 19, an epitaxial layer 22 of *Si*_{1-*x*} Ge_{*x*} where x is the mole fraction of germanium and may be in the range from 0.01 to 0.90. Layer 22 may alternatively be *Si*_{1-*x*-*y*} Ge_{*x*}C_{*y*}. Carbon tends to reduce the lattice constant of the SiGeC alloy to achieve stress-free layer 22. For example, germanium tends to increase the lattice constant of silicon while carbon tends to reduce the lattice constant (to a first order), the addition of 12% germanium is roughly equivalent to 1% carbon to achieve a stress-free film of *Si*_{1-*x-y*} Ge_{*x*}C_{*y*}. Layer 22 may have a thickness in the range from 100 nm to 50µm.. Layer 22 functions to carry the optical radiation, light or the optical mode 24. Layer 22 has an upper surface 23.

Over upper surface 23, an epitaxial layer 26 is formed of silicon having a thickness, for example, in the range from 3 - 5µm. Silicon layer 26 is patterned, for example, by photolithographic masking and etching to form a strip 28 having a thickness in the range from 3-5µm in first areas 29 where waveguide 10 is desired. Layer 26 may have second areas 30 which have a thickness in the range from 10 - 40 nm which may cover layer 22 in areas not covered by first areas 29 to stabilize the alloy SiGe or SiGeC in layer 22. Strip 28 formed by patterning layer 26 functions to isolate the optical mode, as described by Maxwell's equations well known in the art, to the region beneath strip 28. Strip 28 may have a width shown by arrow 34 in Figure 1 in the range from 5.6-8.4µm for optical radiation having a wavelength of 1.3µm..

Figure 2 shows an alternate embodiment of the invention. In Figure 2, like references are used for functions corresponding to the apparatus of Figure 1. Figure 2 shows an optical waveguide 40. Substrate 42 which may be, for example, single crystalline silicon has an upper surface 43. A layer 18 of epitaxial silicon is formed on upper surface 43. The other layers, layers 22 and 26 in waveguide 40, function the same as described in Figure 1 for waveguide 10.

In Figures 1 and 2, layer 26 may be selected from the group consisting of SiO₂, Si, *Si*_{1-*x*-*y*} Ge_{*x*}C_{*y*}, *Si*_{1-*x*} Ge_{*x*} so long as the material selected for layer 22 has a different index of refraction than layer 22. Typical values for the index of refraction of typical materials are air:1, *SiO*₂:3.9, Si:11.9, Ge:16 and SiC: 2.65-2.69 and alloys thereof have an index of refraction n proportional to the atomic percent of the material contributed. The index of refraction is equal to the sum of each atomic percent of each material multiplied by the respective index of refraction for that material. The optical performance of waveguides 10 and 40, shown in Figures 1 and 2, respectively, are expected to have a loss less than 1.9 dB/cm, an improvement in attenuation over the prior art. The thickness and the width of the waveguiding layer is chosen to ensure maximum coupling efficiency between the optical fiber and the waveguide.

An optical waveguide has been described for carrying optical radiation comprising a substrate, first epitaxial layer of *Si*_{1-*x*} Ge_{*x*} or Si_{1-*x*-*y*} Ge_{*x*}C_{*y*} formed over the substrate, and a second epitaxial layer of material having a different index of refraction formed over the first layer. The second layer may be, for example, Si, Si_{1-*x*} Ge_{*x*}*, Si*_{1-*x*-*y*} Ge_{*x*}C_{*y*} or *SiO*₂ and patterned to have a first thickness in first areas where the strip-loaded optical waveguide is desired. The second layer has a second thickness in second areas in the range from 10 - 40 nm where no optical waveguide is desired.

Further, an optical waveguide is described formed on a layer which is part of a SOI substrate such as separation by implantation of oxygen (SIMOX) wherein tee layer is a single crystalline layer on its upper surface.

Optical waveguides 10 and 40, shown in Figures 1 and 2, are suitable for use in integrated optical systems and may be easily fabricated on integrated circuits using semiconductor processing techniques. The strip-loaded optical waveguides 10 and 40 are analogous in the microwave art to microstrip waveguides, well known in the art, having a metal strip on a dielectric layer over a ground plane.

Where there has been described and illustrated two strip-loaded optical waveguides for carrying optical radiation in a semiconductor layer without the need for surfaces or material interfaces to contain the optical radiation in the lateral dimension, it will be apparent to those skilled in the art that modifications and variations are possible without deviating from the broad scope of the invention which shall be limited solely by the scope of the claims appended hereto.

## Claims

1. A waveguide (10) for carrying optical radiation comprising: a substrate (12),
a first layer (18) of silicon formed over said substrate (12),
a second layer (22) of a material selected from the group consisting of *Si*_{1-*x*} Ge_{*x*} and *Si*_{1-*x*-*y*} Ge_{*x*}*C*_{*y*} formed over said first layer of silicon (18), and
a third layer (26) of material formed over said second layer (22) having a first thickness in first areas (29) where said waveguide (10) is desired and a second thickness in second areas (30) where no waveguide is desired.

2. The waveguide of claim 1, wherein said first layer (18) is an epitaxial layer having a thickness in the range from 10 nm to 5µm.

3. The waveguide of claim 1 or 2, wherein said second thickness in second areas (30) of said third layer (26) is in the range from 10 - 40 nm and wherein said first thickness in said first areas (29) of said third layer (26) is in the range from 3-5µm.

4. The waveguide of any of the preceding claims 1 to 3, wherein said second layer (22) has a thickness in the range from 2.8-4.2µm or in the range from 100 nm to 50µm and wherein the mole fraction x of germanium in said material of said second layer (22) is in the range from .012 to .018 or in the range from 0.01 to 0.90.

5. The waveguide of any of the preceding claims 1 to 4, wherein said substrate (12) includes a fourth layer (14) of *SiO*₂ and a fifth layer (16) of single crystalline Si on its upper surface (17) and below said first layer (18).

6. The waveguide of any of the preceding claims 1 to 5, wherein said first areas (29) of said third layer (26) has a width in the range from 5 to 20µm or in the range from 15 to 200 µm and wherein said second layer (22) has a width in the range from 5 to 200µm.

7. The waveguide of any of the preceding claims 1 to 6, wherein said third layer (26) is selected from the group consisting of silicon, *SiO*₂, *Si*_{1*-x*} Ge_{*x*} and *Si*_{1-*x*-*y*} Ge_{*x*}C_{*y*} so long as the material has a different composition than said second layer (22).

8. A method for fabricating an optical waveguide (10) comprising the steps of:
selecting a substrate (12),
forming a first layer (18) of silicon over said substrate (12),
forming a second layer (22) of material, said material selected from the group consisting of *Si*_{1-*x*} Ge_{*x*}, and *Si*_{1-*x*-*y*} Ge_{*x*}*C*_{*y*} over said first layer of silicon,
forming a third layer (26) of material over said second layer (22) having an index of refraction different from the index of refraction of said second layer (22), and patterning said third layer (26) to form first areas (29) having a first thickness where said waveguide (10) is desired and forming second areas (30) having a second thickness where no waveguide is desired.

9. The method of claim 8, wherein said step of forming said first layer (18) includes the step of forming an epitaxial layer having a thickness in the range from 10 nm to 5µm..

10. The method of claim 9, wherein said step of patterning said third layer (26) includes a first thickness in said first areas (29) in the range from 3-5µm and wherein said first areas (29) of said third layer (26) have a width in the range from 5 to 20 µm or in the range from 15 to 200 µm.

11. The method of any of the preceding claims 8 to 10, wherein said step of forming a second layer (22) includes selecting the mole fraction x of germanium in the range from .012 to .018 or in the range from 0.01 to 0.90 and further includes forming said second layer (22) having a width in the range from 5 - 200 µm.

12. The method of any of the preceding claims 8 to 11, wherein said step of selecting said substrate (12) includes a substrate having a fourth layer (14) of SiO₂ and a fifth layer (16) of Si on its upper surface (17).
